# EUROPEAN PATENT APPLICATION

(11) **EP 3 290 193 A1**
(43) Date of publication of application: **07.03.2018**
(21) Application number: 17186566.0
(22) Date of filing: 17.08.2017
(51) Int. Cl.: B29D 11/00, A42B 3/24, B29C 45/14

(54) **A METHOD OF MANUFACTURING ANTI-FOG LENS AND THE ARTICLE OF MANUFACTURE**

(30) Priority: 17.08.2016 CN 201610682430
(71) Applicant: Dongguan Koda Optical Lens Co.,Ltd. DONGGUAN KODA OPTICAL LENS CO.,LTD., Dongguan, Guangdong 523000 (CN)
(72) Inventor: WU, Chih-Ming, Dongguan,, Guangdong 523000 (CN)
(74) Representative: Karakatsanis, Georgios

(57) **Abstract**

A method of manufacturing anti-fog lens, wherein the method includes the following steps: Glue the anti-fog film with a PC film through optical cement, and finalize the design, thus forming an anti-fog sheet (4) matching with the internal side of lens (3); place the anti-fog sheet (4) in the injection mold cavity of lens (3) in advance, which is placed on the internal side of lens (3); inject the melted PC material into the cavity. Before curing, the PC material is at a high temperature, under which the PC material and anti-fog sheet (4) will fuse into one. After curing, a multi-layered anti-fog lens is obtained. This disclosure also provides an anti-fog lens made by the above method. This method makes the combination of anti-fog film (4) with lens (3) more reliable, not only enjoying excellent anti-fog performance, but also guaranteeing its overall stability.

## Description

### Field of the Invention

The invention relates to a manufacturing art of lens, particularly to the manufacturing method of anti-fog lens and the article of manufacture.

### Background of the Invention

Traditional helmet lens or ski lens is made of PC material, which doesn't have the anti-fog effect. Considering that the confined lens and the body temperature can produce fog, it is necessary to take corresponding measures to provide lens with anti-fog effect. To this end, the most common practice is to add a layer of anti-fog film. The traditional anti-fog lens is generally manufactured by direct gluing, which simply glues the anti-fog film directly on the internal side of the lens, making it easy to loose and fall off. The PC injection molded lens is smooth, making it hard to glue with the anti-fog film (generally using TAC anti-fog film). Even if corresponding grooves is provided on lens, it is also difficult to ensure the gluing effect. To sum up, the anti-fog lens formed by direct gluing is not reliable as a whole and remains to be improved.

### Summary of Invention

To overcome the defects mentioned above, the present invention aims to provide a method of manufacturing anti-fog lens, thus making the combination of anti-fog film and lens more reliable, maintaining its overall stability while enjoying excellent anti-fog performance. In addition, another object of the present invention is to provide a kind of anti-fog lens with more scientific, reasonable, stable and reliable structure.

The present invention adopts the technical scheme as follows: A method of manufacturing anti-fog lens, which is characterized in that the method includes the following steps:
1) Glue the anti-fog film with the PC film through optical cement, and finalize the design, thus forming an anti-fog sheet matching with the internal side of lens;
2) Place the anti-fog sheet formed in Step 1) in the injection mold cavity of lens in advance, which is placed in the internal side of lens;
3) Inject the melted PC material into the cavity. Before curing, the PC material is at a high temperature of 260-280 , under which the PC material and anti-fog sheet will fuse into one. After curing, a multi-layered anti-fog lens is obtained.

Preferably, in Step 1), the said anti-fog film is triacetate cellulose film (TAC).

Preferably, in Step 1), the thickness of the said anti-fog film is between 0.3-0.6mm.

Preferably, in Step 1), the thickness of the said PC film is between 0.3-0.6mm

Preferably, in Step 1), the said anti-fog film glues with PC film through optical cement, and then finalize the design by way of heat setting. Also, it is feasible to finalize the design before gluing with optical cement.

An anti-fog lens manufactured by using above-mentioned method, including the lens and the anti-fog sheet attached to the internal side of lens. It is characterized in that the said anti-fog sheet is a three-layered structure sheet which is obtained by gluing the anti-fog film with the PC film through optical cement. Wherein, there are three layers, i.e., a layer of anti-fog film, a layer of PC film and a layer of optical cement.

Preferably, the said anti-fog film is triacetate cellulose film (TAC).

Preferably, the thickness of the said anti-fog film is between 0.3-0.6mm and the thickness of the said PC film is between 0.3-0.6mm.

Wherein, the said lens is helmet lens or ski lens, or other similar lenses requiring anti-fog effect.

Preferably, as the first style, the said helmet lens is provided with a mounting hole on both ends, the inside of the hole is smooth, and the said anti-fog sheet fully covers and fuses with the internal side of helmet lens;

Preferably, as the second style, the said helmet lens is provided with a mounting hole on both ends, the inside of the hole is of raised adjusting structure, and the said anti-fog sheet fully covers and fuses with the middle parts of internal side of helmet lens.

The present invention has the following advantages: First glue the anti-fog film and the PC film through optical cement to form anti-fog sheet; then by way of intramode injection molding method, the PC lens fuses with the anti-fog sheet under high temperature in the process of curing, thus forming multi-layered anti-fog lens. These layers of such anti-fog lens are almost integrated in one structure and are not easy to fall off, featuring by reliable and stable.

The present invention will be further explained from the following detailed description taken in conjunction with the accompanying drawings.

### Brief Description of the Drawings

FIG 1 is the overall structural view of embodiment 1;
FIG 2 is the exploded structural view of embodiment 1;
FIG 3 is the overall structural view of embodiment 2;
FIG 4 is the exploded structural view of embodiment 2;
FIG 5 is the overall structural view 1 of embodiment 3;
FIG 6 is the overall structural view 2 of embodiment 3;

In the figure: anti-fog film 1; PC film 2; helmet lens 3; anti-fog sheet 4; mounting hole 5; adjusting structure 6; ski lens 7.

### Detailed Description of the Preferred Embodiments

### Embodiment 1

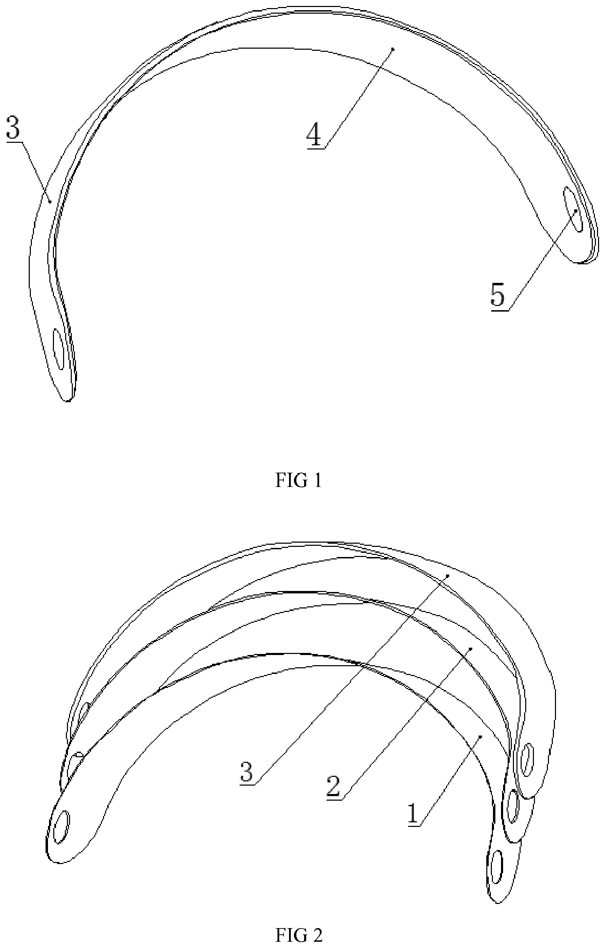

Refer to FIG 1 and FIG 2, the manufacturing method of anti-fog helmet lens provided in this embodiment comprises the following steps:
1) Glue the anti-fog film 1 with the PC film 2 through optical cement, and heat and bend to finalize the design, thus forming the anti-fog sheet 4 matching with the internal side of helmet lens 3; wherein, the said anti-fog film 1 is triacetate cellulose film (TAC), the thickness of the said anti-fog film is between 0.3-0.6mm, and the thickness of the said PC film is between 0.3-0.6mm;
2) Place the anti-fog sheet 4 formed in Step 1) in the injection mold cavity of helmet lens in advance, which is placed in the internal side of helmet lens;
3) Inject the melted PC material into the cavity. Before curing, the PC material is at a high temperature of 260-280 , under which the PC material and anti-fog sheet will fuse into one. After curing, a multi-layered anti-fog helmet lens is obtained. Wherein, it is required to note that the above-mentioned high temperature of 260-280 is the temperature of PC material injected in the cavity with pressure after melting in screw melter. It is important to emphasize that the PC film in Step 1) is necessary, because it is a key link in the whole process. Only after combining the PC film with the anti-fog film to obtain anti-fog sheet can adapt to the follow-up intramode injection molding.

An anti-fog helmet lens manufactured by using above-mentioned method, including the helmet lens 3 and the anti-fog sheet 4 attached to the internal side of helmet lens. The said anti-fog sheet 4 is a three-layered structure sheet which is obtained by gluing the anti-fog film 1 with the PC film 2 through optical cement. Wherein, the said anti-fog film 1 is triacetate cellulose film (TAC). The thickness of the said anti-fog film 1 is between 0.3-0.6mm and the thickness of the said PC film 2 is between 0.3-0.6mm.

As the first style, the said helmet lens 3 is provided with a mounting hole 5 on both ends, the inside of the hole 5 is smooth, and the said anti-fog sheet 4 fully covers and fuses with the lateral sides of helmet lens 3;

### Embodiment 2

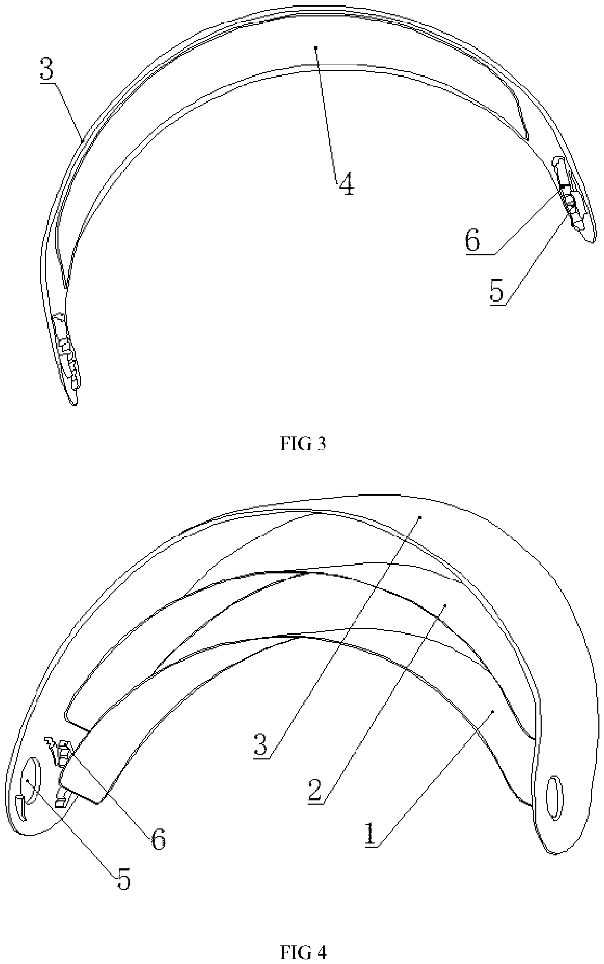

Refer to FIG 3 and FIG 4, this embodiment is basically same with the embodiment 1 and only differs in that:
As the second style, the said helmet lens 3 is provided with a mounting hole 5 on both ends, the inside of the hole is of raised adjusting structure 6, and the said anti-fog sheet 4 fully covers and fuses with the middle parts of internal side of helmet lens 3. Because both ends of the helmet lens are provided with other raised structure, it will affect the full width gluing of the anti-fog sheet. As a result, gluing in the middle part of the helmet lens is a better choice.

### Embodiment 3

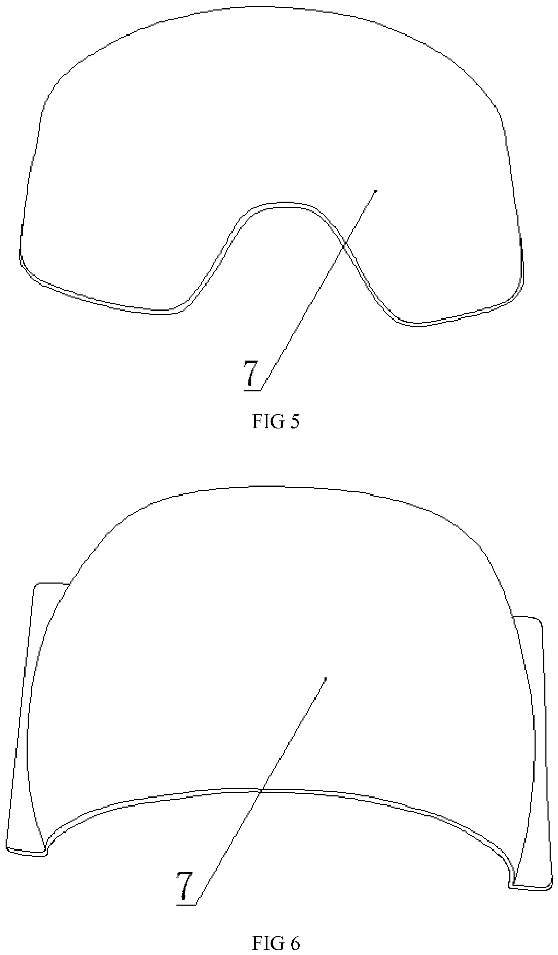

Refer to FIG 5 and FIG 6, this embodiment is basically same with the embodiment 1 and only differs in that: This embodiment provides a method of manufacturing anti-fog ski lens and an anti-fog ski lens manufacture by the method. That is, replace the helmet lens 3 described in embodiment 1 with the ski lens 7.

The present invention is not limited to above embodiments. Other methods of manufacturing anti-fog lenses and their articles of manufacture by adopting same or similar arts with above embodiments of the invention are within the scope of protection of the present invention.

## Claims

1. A method of manufacturing anti-fog lens, which is **characterized in that** the method includes the following steps:
1) Glue the anti-fog film with the PC film through optical cement, and finalize the design, thus forming an anti-fog sheet matching with the internal side of lens;
2) Place the anti-fog sheet formed in Step 1) in the injection mold cavity of lens in advance, which is placed in the internal side of lens;
3) Inject the melted PC material into the cavity. Before curing, the PC material is at a high temperature of 260-280 , under which the PC material and anti-fog sheet will fuse into one. After curing, a multi-layered anti-fog lens is obtained.

2. According to the manufacturing method of anti-fog lens stated in claim 1, which is **characterized in that**, in step 1), the said anti-fog film is a kind of triacetate cellulose film.

3. According to the manufacturing method of anti-fog lens stated in claim 1, which is **characterized in that**, in step 1), the thickness of the said anti-fog film is between 0.3-0.6mm.

4. According to the manufacturing method of anti-fog lens stated in claim 1, which is **characterized in that**, in step 1), the thickness of the said PC film is between 0.3-0.6mm.

5. According to the manufacturing method of anti-fog lens stated in claim 1, which is **characterized in that**, in step 1), the said anti-fog film glues with PC film through optical cement, and then finalize the design by way of heat setting.

6. An anti-fog lens manufactured by using any method of claim 1 to 5, including the lens and the anti-fog sheet attached to the internal side of lens. It is **characterized in that** the said anti-fog sheet is a three-layered structure sheet which is obtained by gluing the anti-fog film with the PC film through optical cement.

7. According to the anti-fog lens stated in claim 6, which is **characterized in that**, the said anti-fog film is a kind of triacetate cellulose film.

8. According to the anti-fog lens stated in claim 6 or 7, which is **characterized in that** the thickness of the said anti-fog film is between 0.3-0.6mm and the thickness of the said PC film is between 0.3-0.6mm.

9. According to the anti-fog lens stated in claim 6, which is **characterized in that** the said lens is a kind of helmet lens; wherein, the said helmet lens is provided with a mounting hole on both ends, the inside of the hole is smooth, and the said anti-fog sheet fully covers and fuses with the internal side of helmet lens; or, the said helmet lens is provided with a mounting hole on both ends, the inside of the hole is of raised adjusting structure, and the said anti-fog sheet fully covers and fuses with the middle parts of internal side of helmet lens.

10. According to the anti-fog lens stated in claim 6, which is **characterized in that**, the said lens is ski lens.
